# EUROPEAN PATENT APPLICATION

(11) **EP 2 522 635 A1**
(43) Date of publication of application: **14.11.2012**
(21) Application number: 12167600.1
(22) Date of filing: 11.05.2012
(51) Int. Cl.: C02F 9/00, B01D 17/02

(54) **A method and an arrangement for treatment of bilge water**

(30) Priority: 11.05.2011 FI 20115457
(71) Applicant: Ekoport Turku Oy, 02150 Espoo (FI)
(72) Inventor: Kuutti, Taisto, 02150 Espoo (FI)
(74) Representative: Kärkkäinen, Veli-Matti

(57) **Abstract**

The present invention relates to the treatment of oil-containing marine wastewaters and particularly to a method and arrangement for the treatment of bilge waters. The arrangement of the invention comprises a separating tank (1, 4), a pre-heating block (2) and a centrifugal separator (3), surface oil and bottom deposit being separated from the bilge water in the separating tank (1, 4); the bilge water being pre-heated in the pre-heating block (2); and oil and sludge being centrifugally separated from the bilge water in the centrifugal separator (3). The solution of the invention allows bilge water treatment to be made environmentally friendlier.

## Description

### Field of the invention

The invention relates to the treatment of oil-containing marine sewage and particularly to a method and an arrangement for the treatment of bilge waters.

### Background of the invention

When a ship's decks, tanks and motors, for example, are washed in marine conditions, oil-containing wastewaters are produced. Different types of wastewaters produced on board an ocean-going ship are generally called bilge waters. Bilge water usually contains combustible oil, lubricating oil and other impurities, such as sand, gravel and/or engine coolant. Discharge of bilge waters into the sea is typically forbidden and according to current regulations, which are stricter than the former ones, ships are responsible for collecting their bilge waters and shipping them to the shore for appropriate waste treatment.

In waste treatment bilge water has typically been added into waste that is to be burned. Absorption of bilge waters into other waste and the burning thereof is expensive and, moreover, burdens the environment. In fact, there is clearly a need and demand for new solutions for the treatment of oil-containing marine wastewaters to allow bilge water treatment to be made more efficient and rational and to make bilge water treatment less harmful to the nature.

### Brief description of the invention

It is an object of the present invention to provide a novel method and arrangement for the treatment of bilge waters.

The method of the invention for the treatment of bilge waters is characterized in that the method comprises the following steps:
a separating step in which surface oil and bottom deposit are separated from bilge water in a separating tank;
a pre-heating step in which the bilge water is heated in a pre-heating block; and
a centrifugal separation step in which oil and sludge are separated from the pre-heated bilge water in a centrifugal separator.

The arrangement of the invention for the treatment of bilge waters is characterized in that the arrangement comprises a separating tank, a pre-heating block and a centrifugal separator to allow
surface oil and bottom deposit to be separated from the bilge water in the separating tank;
bilge water to be pre-heated in the pre-heating block; and
oil and sludge to be separated from the pre-heated bilge water in the centrifugal separator.

An improved solution for the treatment of bilge waters has now been developed, the solution being applicable to the purification of bilge water in all types of vessels. The solution is characterised by what is stated in the independent claims. Some preferred embodiments of the invention are disclosed in the dependent claims.

The present invention provides several advantages, which will be better understood from the detailed description. The solution according to the invention for treatment of bilge waters allows bilge water treatment to be enhanced and rationalized. The solution according to the invention for treatment of bilge waters also enables bilge water treatment to be made environmentally friendlier.

### Brief description of the figures

Figure 1 shows an arrangement according to an embodiment of the invention for bilge water treatment;
Figure 2 shows a structure of a separating tank according to an embodiment of the arrangement of the invention for bilge water treatment;
Figure 3 shows an arrangement according to an alternative embodiment of the invention for bilge water treatment; and
Figure 4 shows an arrangement according to a second alternative embodiment of the invention for bilge water treatment.

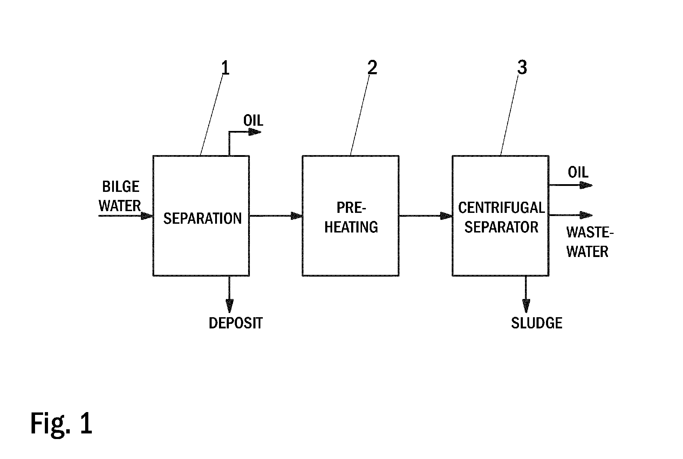

Some embodiments of the invention will now be described in greater detail by means of some preferred embodiments, with reference to Figures 1 to 4.

### Detailed description of an embodiment of the invention

Figure 1 shows an arrangement according to an embodiment of the invention for bilge water treatment. The arrangement according to the invention for bilge water treatment comprises a separating tank 1, a pre-heating block 2 and a centrifugal separator 3. According to the arrangement of the invention for bilge water treatment, bilge water is taken to the separating tank 1, where surface oil and bottom deposit are separated from the bilge water, whereby waste bilge water remains.

Bilge water coming from the separating tank 1 is taken to the pre-heating block 2, where the bilge water is pre-heated typically to a temperature of about 80 to 95 °C. The pre-heating in the pre-heating block 2 may be carried out by means of a pre-heating element, such as an electric resistor. The electric resistor may be a spiral resistor, for example. From the pre-heating block 2, the pre-heated bilge water is taken to the centrifugal separator 3. A centrifugal force generated in the centrifugal separator 3 allows oil to be separated from the pre-heated bilge water for utilization, and sludge, correspondingly, for conventional sludge treatment. Remaining wastewater is taken from the centrifugal separator 3 to a wastewater tank for conventional wastewater treatment. When necessary, compressed flushing air and/or flushing water may be used in the centrifugal separator 3 for rinsing it. Wastewater coming from the centrifugal separator 3 during the process may be used as flushing water, the water being suitably heated and thus well suited for flushing.

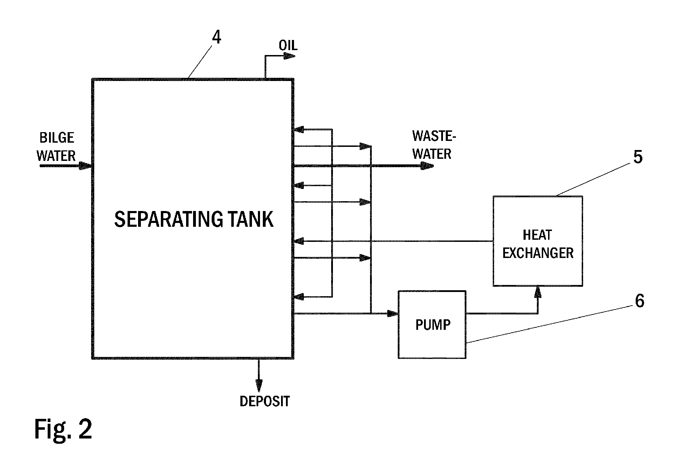

Figure 2 shows a structure of a separating tank according to an embodiment of the arrangement of the invention for bilge water treatment. According to the arrangement of the invention for bilge water treatment, surface oil and bottom deposit are separated from the bilge water brought in a separating tank 4, whereby waste bilge water remains.

According to the bilge water treatment arrangement of the invention, the bilge water in the separating tank 4 is heated typically to a temperature of about 60 to 65 °C. The heating of the bilge water that is in the separating tank 4 may be carried out by means of a heat exchanger 5. From the separating tank 4, the bilge water is brought to the heat exchanger 5, the heated bilge water being then returned to the separating tank 4. Bilge water circulation may be carried out by means of a pump 6 between the separating tank 4 and the heat exchanger 5. Heating in the heat exchanger 5 may be carried out by means of a heating element, such as an electric resistor. The electric resistor may be a spiral resistor, for example. Bilge water to be heated may be taken from the separating tank 4 from different height levels in the separating tank 4. Correspondingly, bilge water to be returned from the heat exchanger 5 to the separating tank 4 may be brought to different height levels in the separating tank 4. Bilge water is typically returned close to the height of the top surface of the bilge water in the separating tank 4, thus allowing heated oil to separate and move higher up towards the surface of the separating tank 4. In the bilge water treatment arrangement of the invention the bilge water in the separating tank 4 is thus circulated to allow oil contained in the bilge water to be separated to move higher up towards the surface of the separating tank 4, thus preventing bilge water from collecting into layers of oil-water-oil-water-oil-water.

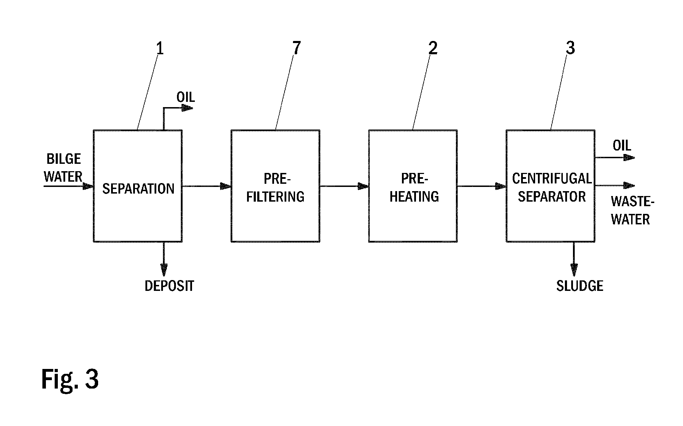

Figure 3 shows an arrangement according to an alternative embodiment of the invention for bilge water treatment. The arrangement according to the alternative embodiment of the invention for bilge water treatment comprises a separating tank 1, a pre-filtering block 7, a pre-heating block 2 and a centrifugal separator 3. According to the arrangement of the invention for bilge water treatment, bilge water is taken to the separating tank 1, where surface oil and bottom deposit are separated from the bilge water, whereby waste bilge water remains. Bilge water from the separating tank 1 is taken to the pre-filtering block 7, where the coarsest impurities in the bilge water are filtered before it is taken to the centrifugal separator 3.

The pre-filtered bilge water from the pre-filtering block 7 is taken to the pre-heating block 2, where the bilge water is pre-heated typically to a temperature of about 80 to 95 °C. The pre-heating in the pre-heating block 2 may be carried out by means of an electric resistor, such as a spring resistor. From the pre-heating block 2 the pre-filtered and pre-heated bilge water is taken to the centrifugal separator 3. A centrifugal force generated in the centrifugal separator 3 allows oil to be separated from the pre-heated bilge water for utilization, and sludge, correspondingly, for conventional sludge treatment. The remaining wastewater is taken from the centrifugal separator 3 to a wastewater tank for conventional wastewater treatment.

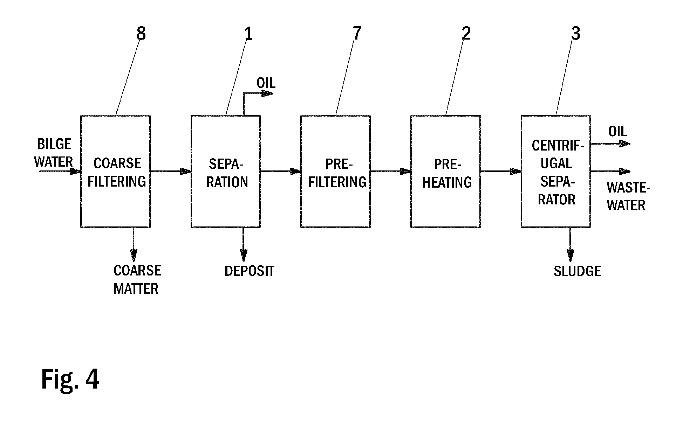

Figure 4 shows an arrangement according to a second alternative embodiment of the invention for bilge water treatment. The arrangement according to the second alternative embodiment of the invention for bilge water treatment comprises a coarse filtering block 8, a separating tank 1, a pre-filtering block 7, a pre-heating block 2 and a centrifugal separator 3. According to the arrangement of the invention for bilge water treatment, the bilge water is taken to the coarse filtering block 8, where the coarsest impurities contained in the incoming bilge water are filtered before the bilge water is taken to the separating tank 1. The filtering in the coarse filtering block 8 may be carried out using a filter density of 1 to 30 mm, typically about 3 to 10 mm, for example.

The coarse-filtered bilge water from the coarse filtering block 8 is taken to the separating tank 1, where surface oil and bottom deposit are separated from the bilge water, whereby waste bilge water remains. Bilge water from the separating tank 1 is taken to the pre-filtering block 7, where the coarsest impurities contained in the bilge water are filtered before it is taken to the centrifugal separator 3. Pre-filtered bilge water coming from the pre-filtering block 7 is taken to the pre-heating block 2, where the bilge water is pre-heated typically to a temperature of about 80 to 95 °C. The pre-heating in the pre-heating block 2 may be carried out by means of an electric resistor, such as a spring resistor. From the pre-heating block 2, the pre-filtered and pre-heated bilge water is taken to the centrifugal separator 3. A centrifugal force generated in the centrifugal separator 3 allows oil to be separated from the pre-heated bilge water for utilization, and sludge, correspondingly, for conventional sludge treatment. The remaining wastewater is taken from the centrifugal separator 3 to a wastewater tank for conventional wastewater treatment.

The solution according to the invention for treatment of bilge waters allows the treatment of bilge waters to be enhanced and rationalized. The solution according to the invention for treatment of bilge waters also enables the treatment of bilge waters to be made environmentally friendlier.

The solution of the invention provides a new kind of method and arrangement for bilge water treatment as it allows oil contained in bilge water to be recovered and utilized, sludge contained in bilge water to be separated for possible use as soil conditioner and, further, the bilge water itself to be purified so as to be suitable as ordinary wastewater. The solution according to the invention for bilge water treatment may be used for purifying bilge waters generated in all types of vessels.

It is obvious to a person skilled in the art that, as technology advances, the basic idea of the invention may be implemented in various ways. The invention and its embodiments are thus not restricted to the examples described above but may vary within the scope of the claims. Thus, different features may be left out, modified or replaced by equivalent features, and the features described in this patent application may be combined to form various combinations.

## Claims

1. A method for the treatment of bilge waters, **characterized in that** the method comprises the following steps:
a separating step, in which surface oil and bottom deposit are separated from bilge water in a separating tank (1, 4);
a pre-heating step, in which the bilge water is pre-heated in a pre-heating block (2); and
a centrifugal separation step, in which oil and sludge are centrifugally separated from the pre-heated bilge water in a centrifugal separator (3).

2. A method as claimed in claim 1, **characterized in that** in the separating step the bilge water in the separating tank (1, 4) is heated to a temperature of about 60 to 65 °C.

3. A method as claimed in claim 1 or 2, **characterized in that** in the separating step the heated bilge water in the separating tank (1, 4) is circulated back to the separating tank (1, 4), close to the height level of the top surface of the bilge water in the separating tank (1, 4).

4. A method as claimed in claim 1, 2 or 3, **characterized in that** in the pre-heating step the bilge water is pre-heated to a temperature of about 80 to 95 °C.

5. A method as claimed in any one of the preceding claims 1 to 4, **characterized in that** compressed flushing air and/or flushing water is used in the centrifugal separation step for flushing the centrifugal separator (3).

6. A method as claimed in claim 5, **characterized in that** wastewater from the centrifugal separator (3) is used as the flushing water.

7. A method as claimed in any one of the preceding claims 1 to 6, **characterized in that** the method further comprises a pre-filtering step in which the coarsest impurities in the bilge water coming from the separating tank (1, 4) are filtered in a pre-filtering block (7) before the bilge water is taken to the centrifugal separator (3).

8. A method as claimed in any one of the preceding claims 1 to 7, **characterized in that** the method further comprises a coarse filtering step in which the coarsest impurities contained in the incoming bilge water are filtered before the bilge water is taken into the separating tank (1, 4).

9. A method as claimed in claim 8, **characterized in that** the filter density used in the coarse filtering step is 1 to 30 mm, typically about 3 to 10 mm.

10. An arrangement for bilge water treatment, **characterized in that** the arrangement comprises a separating tank (1, 4), a pre-heating block (2) and a centrifugal separator (3) to allow
surface oil and bottom deposit to be separated from the bilge water in the separating tank (1, 4);
bilge water to be pre-heated in the pre-heating block (2); and
oil and sludge to be centrifugally separated from the pre-heated bilge water in the centrifugal separator (3).

11. An arrangement as claimed in claim 10, **characterized in that** the arrangement comprises a heat exchanger (5) provided in connection with the separating tank (4), the heat exchanger (5) allowing bilge water to be heated to a temperature of about 60 to 65 °C.

12. An arrangement as claimed in claim 10 or 11, **characterized in that** the arrangement comprises a heat exchanger (5) provided in connection with the separating tank (4), heated bilge water returned from the heat exchanger (5) being circulated back to the separating tank (4), close to the height level of the top surface of the bilge water in the separating tank (4).

13. An arrangement as claimed in claim 11 or 12, **characterized in that** the arrangement comprises a pump (6) placed between the separating tank (4) and the heat exchanger (5), the pump (6) allowing the heated bilge water to be circulated.

14. An arrangement as claimed in any one of claims 10 to 13, **characterized in that** the pre-heating block (2) is provided with a pre-heating element, such as an electrical resistor that allows bilge water to be pre-heated to a temperature of about 80 to 95 °C.

15. An arrangement as claimed in any one of the preceding claims 10 to 14, **characterized in that** the arrangement further comprises a pre-filtering block (7) in which the coarsest impurities in the bilge water coming from the separating tank (1, 4) are filtered before the bilge water is taken to the centrifugal separator (3).

16. An arrangement as claimed in any one of the preceding claims 10 to 15, **characterized in that** the arrangement further comprises a coarse filtering block (8) in which the coarsest impurities in the incoming bilge water are filtered before the bilge water is taken to the separating tank (1, 4).
